# EUROPEAN PATENT APPLICATION

(11) **EP 4 759 141 A1**
(43) Date of publication of application: **17.06.2026**
(21) Application number: 25221813.6
(22) Date of filing: 09.12.2025
(51) Int. Cl.: A22B 7/00, A22C 17/00, A22C 21/00

(54) **GRIPPER, A VISION GUIDED ROBOT WITH SUCH GRIPPER, AND A SYSTEM, METHOD, AND COMPUTER PROGRAM FOR THE AUTOMATED SUSPENSION OF POULTRY**

(30) Priority: 11.12.2024 NL 2039294
(71) Applicant: Meyn Food Processing Technology B.V., 1511 MA Oostzaan (NL)
(72) Inventor: VAN STEIJN, Aloysius Christianus Maria, Oostzaan (NL); VAN STRALEN, Rick Sebastiaan, Oostzaan (NL); VAN SPALL, Joy David Mike, Oostzaan (NL); AL, Gert Jan, Oostzaan (NL)
(74) Representative: van Breda, Jacobus

(57) **Abstract**

A system for automatically suspending poultry by the legs comprising a vision guide robot provided with a gripper (3) arranged to engage poultry legs, said gripper comprising a first set (1) of two primary jaw arms (1.1, 1.2) being arranged to clamp a first leg of a poultry carcass, and a second set (2) of two secondary jaw (2.1, 2.2) arms being arranged to clamp a second leg of the poultry carcass, wherein at least one of the two primary jaw arms (1.1) is mounted to be movable to and from the other primary jaw arm (1.2) to clamp the first poultry leg and at least one of the two secondary jaw arms (2.1) is mounted to be movable relative to the other secondary jaw arm (2.2) to clamp the second leg.

## Description

The present invention relates to a gripper, a vision guided robot, and a system, method, and computer program for the automated suspension of poultry using said gripper.

CN117322457 which is considered to disclose the features of the preamble of claim 1, relates to a viscera cleaning device for broiler chicken processing comprising a fixed bottom plate, a protective sleeve which is fixedly connected to the top of the fixed bottom plate, a limiting sleeve which is fixedly connected to the center of the top of the fixed bottom plate, an overall rotating mechanism between the fixed bottom plate and the limiting sleeve, and a fixed top frame which is fixedly connected to the top of the overall rotating mechanism; wherein a plurality of first air cylinders are fixedly connected to the top of the fixed top frame, and adjusting rotating mechanisms are fixedly connected to the output ends of the first air cylinders, and broiler clamping mechanisms are fixedly connected to the bottoms of the adjusting rotating mechanisms; wherein one side and the rear end of the top of the fixed bottom plate are fixedly connected with an opening mechanism and a viscera cleaning mechanism respectively.

EP4265113A1 discloses a system and method for automatically suspending poultry by the legs from a carrier of a carrier conveyor, comprising a feedline for the poultry to be suspended, wherein the system comprises an imaging device connected to a decision-making tool to process images from the poultry on the feedline and a vision guided robot for picking up the poultry from the feedline and suspend the poultry from the carrier of the carrier conveyor, wherein the decision-making tool is arranged to detect poultry with the breast engaging the feedline and to control the vision guided robot to pick up the poultry from the feedline by engaging the poultry at the legs, and subsequently suspend the poultry by the legs from the carrier of the carrier conveyor.

A disadvantage of the prior art is its reliance on poultry being positioned with their breast engaging the feedline. This dependency introduces additional complexity, particularly when poultry are not initially aligned in the required orientation lying on the breast, necessitating reorientation steps that reduce system and operational efficiency.

It is an object of the invention to address the above problem, and to provide a system and method and ancillary equipment enabling to pick up the poultry independent from its orientation on the feedline, and to improve reliability and make the system and its method of operation simpler and less complicated. It is also an object of the invention to provide a gripper being capable to handle a larger variety of sizes of the poultry that is to be suspended in a carrier of a conveyor line.

According to the invention a gripper, a vision guided robot with such a gripper, and a system, method, and computer program for the automated suspension of poultry is proposed consistent with the appended claims.

According to a first aspect of the invention, there is provided a gripper comprising a first set of two primary jaw arms, which are arranged to clamp a first leg of a poultry carcass, and a second set of two secondary jaw arms being arranged to clamp a second leg of the poultry carcass, wherein at least one of the primary jaw arms is mounted to be movable to and from the other primary jaw arm to clamp the first poultry leg, and at least one of the two secondary jaw arms is mounted to be movable relative to the other secondary jaw arm to clamp the second leg, and that both primary jaw arms are slidable to and from each other and both secondary jaw arms are slidable to and fro each other. In this way, the gripper may be arranged to operate between an open position wherein the primary jaw arms are distant from each other and the secondary jaw arms are distant from each other and a closed position wherein both the primary jaw arms have moved towards each other and both the secondary jaw arms have moved towards each other to clamp the legs.

The jaw arms that belong to the same set of jaw arms may cover a wide area to clamp the poultry leg, thus the gripper is capable to clamp poultry legs that are at very different distances or even at different orientations relative to each other. In this context, the parameter 'leg pitch' is used which is defined as the distance between the legs of a poultry carcass when hanging from a shackle which is used to suspend and transport the poultry.

Preferably the first set of two primary jaw arms and/or the second set of two secondary jaw arms comprises a straight portion along which at least one of the jaw arms of the concerning set of jaw arms is slidable to and fro the other jaw arm of the concerning set of jaw arms.

Suitable embodiments are characterized in that the first set of two primary jaw arms comprises a first straight portion along which one of the primary jaw arms is slidable to and fro the other primary jaw arm, and/or that the second set of two secondary jaw arms comprises a second straight portion along which one of the secondary jaw arms is slidable to and fro the other secondary jaw arm. This enables that when the gripper engages the legs, the legs of the poultry are arranged to rest against the straight portions of the sets of jaw arms, so that the closing motion of the jaw arms entrap and clamp the legs. The advantage is that despite that the legs of the poultry carcasses can be at different distances from each other, the legs will anyway be clamped at the same time by the sliding motion of the jaw arms of the two sets of jaw arms.

Preferably the straight portion of the concerning set of jaw arms is integral with one of the primary jaw arms and/or with one of the secondary jaw arms of the concerning set of jaw arms, respectively. This simplifies the construction and reduces costs.

In one embodiment, both primary jaw arms and/or both secondary jaw arms are slidably mounted in order to enable adjusting the distance between the first set of jaw arms and the second set of jaw arms, which ensures a reliable operation even in extended or repeated use scenarios.

In one embodiment, a distance between the first set of two primary jaw arms and the second set of two secondary jaw arms is adjustable, particularly when the poultry legs are to be clamped or are clamped, so as to match the aforementioned leg-pitch. In connection therewith preferably the gripper is arranged to set the distance between the first set and the second set of jaw arms after the poultry legs are clamped by the jaw arms in their closed position.

In connection therewith it is preferred that the poultry is imaged with appropriate imaging tools, notably a camera, and images as derived by such imaging of the poultry are used to locate the first leg and the second leg of the poultry, wherein based on the location of the first leg and the second leg of the poultry and prior to clamping the legs of the poultry, a distance between the primary jaws and the secondary jaws of the gripper is adjusted to correspond to the distance between the legs of the poultry.

The invention is also embodied in a vision guided robot for picking poultry from a feedline and placing the poultry in a poultry carrier of a carrier conveyor, wherein the vision guided robot is provided with at least one gripper according to the invention.

According to another aspect of the invention a system is proposed for automatically suspending poultry by the legs, preferably by the hocks, from a carrier of a carrier conveyor, comprising a feedline for the poultry to be suspended, wherein the system comprises an imaging device connected to a decision-making tool to process images received from the imaging device of the poultry on the feedline, and the decision-making tool is arranged to detect the poultry and to control a vision guided robot to pick up the poultry from the feedline by engaging the poultry at the legs, for example at the shanks, and subsequently suspend the poultry by the legs from the carrier of the carrier conveyor, wherein to support a smooth operation the vision guided robot is provided with at least one gripper according to the invention.

Preferably the decision-making tool is arranged to control the vision guided robot to carry out the following processing steps based on images received from the imaging device:
a. in case the decision-making tool identifies the legs of the poultry in the images received from the imaging device, the decision-making tool is arranged to have the vision guided robot engage the legs, and to pick up the poultry by the legs and suspend the poultry by the legs from the carrier of the carrier conveyor; and
b. in case the decision-making tool does not identify the legs of the poultry in the images received from the imaging device, the decision-making tool is arranged to search and identify in the images from the imaging device the head of the poultry, and after the head of the poultry is identified the decision-making tool is arranged to have the vision guided robot engage the head of the poultry with at least the first set of primary jaw arms and drag the poultry by the head over a predefined length along the feedline, followed by a repetition of step a to identify the legs of the poultry and to pick up the poultry by engaging the legs of the poultry and suspend the poultry by the legs from the carrier of the carrier conveyor.

According to the invention, the system is thus required to carry out in summary the following processing steps:
- take images from the poultry on the feedline;
- process said images to detect and select the legs of the poultry;
- control the vision guided robot to pick up the poultry from the feedline by engaging the poultry at the legs; and,
- control the vision guided robot to suspend the poultry by the legs from the carrier of the carrier conveyor.

The invention is also embodied in a method for automatically suspending poultry by the legs from a carrier of a carrier conveyor, comprising supplying the poultry on a feedline, imaging the poultry and processing said images from the poultry on the feedline so as to detect the poultry and to control a vision guided robot comprising a gripper according to the invention, which gripper is used to pick up the poultry from the feedline by engaging the poultry at the legs, and subsequently suspend the poultry by the legs from the carrier of the carrier conveyor.

Preferably the images from the poultry as derived by said imaging of the poultry are used to locate the first leg and the second leg of the poultry, wherein based on the location of the first leg and the second leg of the poultry and prior to clamping the legs of the poultry, a distance between the primary jaw arms and the secondary jaw arms of the gripper is adjusted to correspond to the distance between the legs of the poultry.

The step of engaging the poultry legs is done by placing the gripper such that a first leg is arranged between the primary jaws and a second leg is arranged between the secondary jaws of the gripper, and thereafter moving at least one of the primary jaws towards the other primary jaw to clamp the first leg and by moving at least one of the secondary jaws towards the other secondary jaw to clamp the second leg.

Preferably the gripper is first placed in a first position to clamp the first leg by the primary jaw arms and thereafter moves the gripper to a second position to clamp the second leg with the secondary jaw arms.

The step of engaging the poultry legs with the gripper is preferably carried out by the following sub-steps:
a. in case the images show the legs of the poultry the vision guided robot is arranged to engage the legs, and to pick up the poultry by the legs and suspend the poultry by the legs from the carrier of the carrier conveyor; and
b. in case the images do not show the legs of the poultry, processing the images to search and identify in the images the head of the poultry, and arranging that after the head of the poultry is identified the vision guided robot is controlled to grab and drag the poultry by the head over a predefined length along the feedline), followed by a repetition of step a to identify the legs in the images of the poultry wherein the vision guided robot subsequently picks up the poultry by the legs and suspends the poultry by the legs from the carrier of the carrier conveyor.

Preferably at least the step of processing of images of the poultry and/or the step of controlling the vision guided robot is implemented using a computer loaded with a computer program. Correspondingly the invention is also embodied in said computer program which when loaded in the computer arranges that the computer causes the system of the invention to execute the method of operation according to the invention. Accordingly also exclusive rights are requested for a computer readable medium provided with the computer program of the invention.

It is a benefit of the invention that the decision-making tool is arranged to control the vision guided robot to engage and pick up the poultry from the feedline in any arbitrary orientation, which is particularly beneficial because of the nonorganized order in which the poultry may be supplied with the feedline.

The accompanying drawings, which are incorporated into and form a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- figure 1a depicts the gripper of the invention with a first set comprising two primary jaw arms and a second set comprising two secondary jaw arms;
- figure 1b depicts the gripper in an opened position;
- figure 1c depicts the gripper in a closed position;
- figure 2 depicts a vision guided robot provided with at least one gripper according to the invention ;
- figure 3 shows a supply station and a feedline forming part of a system according to the invention;
- figure 4a and figure 4b show the system of the invention with a feedline, a vision guided robot, and a carrier conveyor, wherein the poultry is supplied on the feedline;
- figure 5a, figure 5b and figure 5c show the poultry engaging the feedline in three orientations, wherein figure 5a depicts a situation wherein the poultry engages the feedline with its breast down, figure 5b depicts a situation where the poultry engages the feedline with its back down, and figure 5c depicts a situation where the poultry engages the feedline with its breast down, its head visible and none or one foot visible.

Whenever in the figures the same reference numerals are applied, these numerals refer to the same parts.

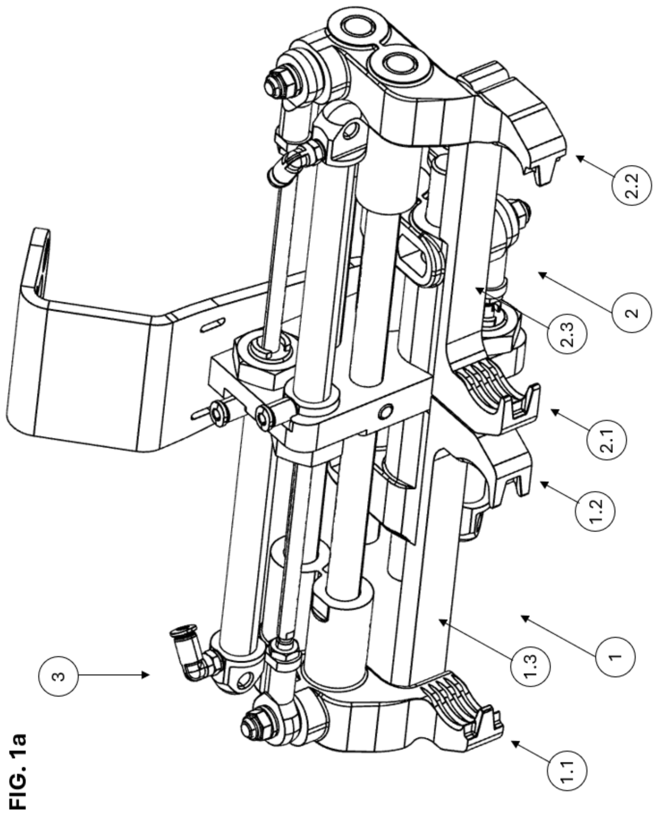

Figures 1a-c depict a gripper 3 according to the invention which is engineered to engage poultry legs.

Figure 1a displays the gripper 3 in an open position, and comprises several parts, to note, a first set 1 of two primary jaw arms 1.1, 1.2 being arranged to clamp a first leg of a poultry carcass (not shown but entirely clear to the skilled person), and a second set 2 of two secondary jaw 2.1, 2.2 arms being arranged to clamp a second leg of the poultry carcass. At least one jaw arm of the two primary jaw arms 1.1 or 1.2 is mounted to be movable to and from the other primary jaw arm 1.2 or 1.1 to clamp the first poultry leg. Further at least one of the two secondary jaw arms 2.1 or 2.2 is mounted to be movable relative to the other secondary jaw arm 2.2 or 2.1 to clamp the second leg of the poultry (not shown).

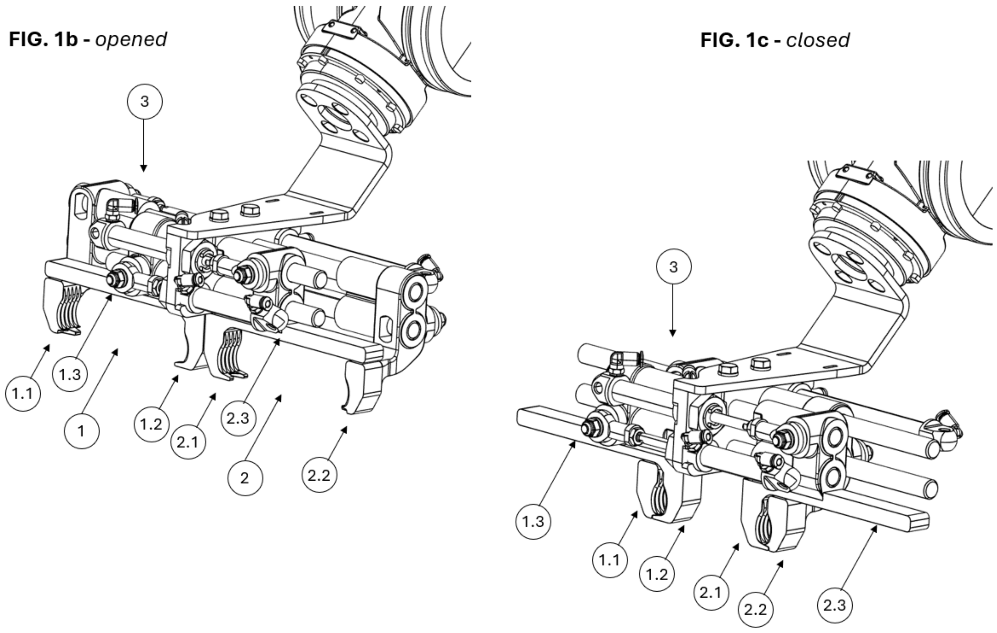

The respective figures 1a, 1b and 1c show a preferred embodiment wherein the first set 1 of two primary jaw arms 1.1, 1.2 comprises a first straight portion 1.3 along which one jaw arm 1.1 of the primary jaw arms is slidable to and fro the other primary jaw arm 1.2. Likewise the second set 2 of two secondary jaw arms 2.1, 2.2 comprises a second straight portion 2.3 along which one jaw arm 2.2 of the secondary jaw arms is slidable to and fro the other secondary jaw arm 2.1. This arranges that when the gripper 3 engages the legs, the legs of the poultry are arranged to rest against the straight portions 1.3 and 2.3 of the sets 1, 2 of jaw arms, so that the closing motion of the jaw arms entrap and clamp the legs. The advantage is that despite that the legs of the poultry carcasses can be at different distances from each other, the legs will anyway be clamped at the same time by the sliding motion of the jaw arms of the two sets of jaw arms.

It will be noted from the figures 1a, 1b that the straight portion 1.3 of the concerning set 1 of jaw arms 1.1, 1.2 is integral with primary jaw arm 1.2 of the primary jaw arms 1.1, 1.2. Likewise the straight portion 2.3 of the concerning set 2 of jaw arms 2.1, 2.2 is integral with secondary jaw arm 2.1 of the secondary jaw arms 2.1, 2.2.

Comparing figures 1b and 1c which respectively display the gripper 3 in an open position and a closed position, illustrates the variable distance between the two primary jaw arms 1.1, 1.2 and the two secondary jaw arms 2.1, 2.2 in their open position and closed position. As shown in these figures, in order to clamp the poultry legs the gripper is arranged to operate between the open position, wherein the primary jaw arms 1.1, 1.2 are distant from each other and the secondary jaw arms 2.1, 2.2 are distant from each other, and a closed position, wherein both the primary jaw arms 1.1, 1.2 have moved towards each other and both the secondary jaw arms 2.1, 2.2 have moved towards each other.

In one embodiment of the gripper 3, a distance between the first set 1 of jaw arms and the second set 2 of jaw arms is adjustable and set by setting the distance between the jaw arms 1.1 and 2.1 when all the jaws are in the closed position as shown in fig. 1c. In this way, the distance between the legs when they are clamped may be selected at a certain leg-pitch which enables that the poultry may eventually be suspended from carriers having that same specific leg-pitch. The adjustment can be easily done remotely by the skilled person by applying appropriate actuators for the jaw arms.

In this embodiment of the gripper of the invention, both primary jaw arms 1.1, 1.2 and both secondary jaw arms 2.1, 2.2 are slidably mounted, but this is not essential.

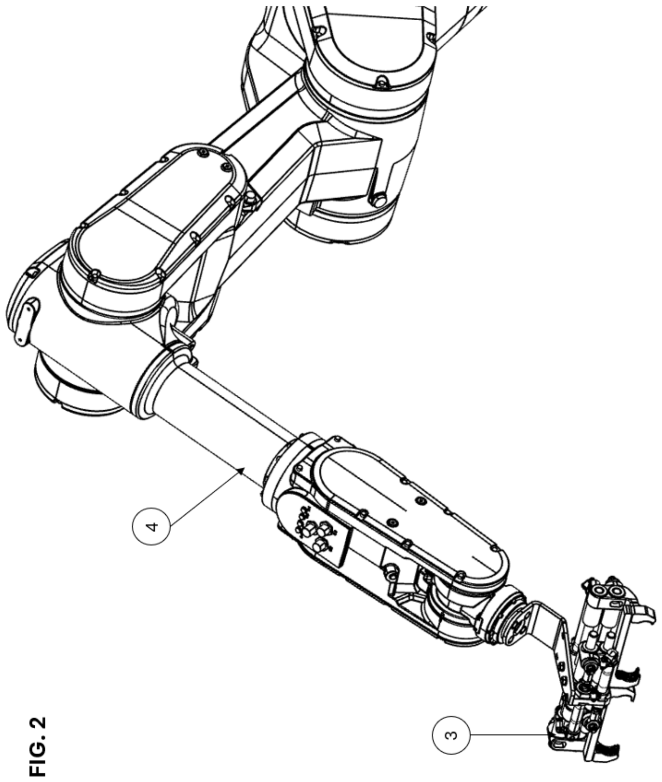

Figure 2 displays a vision guided robot 4 provided with at least one gripper 3 according to the invention.

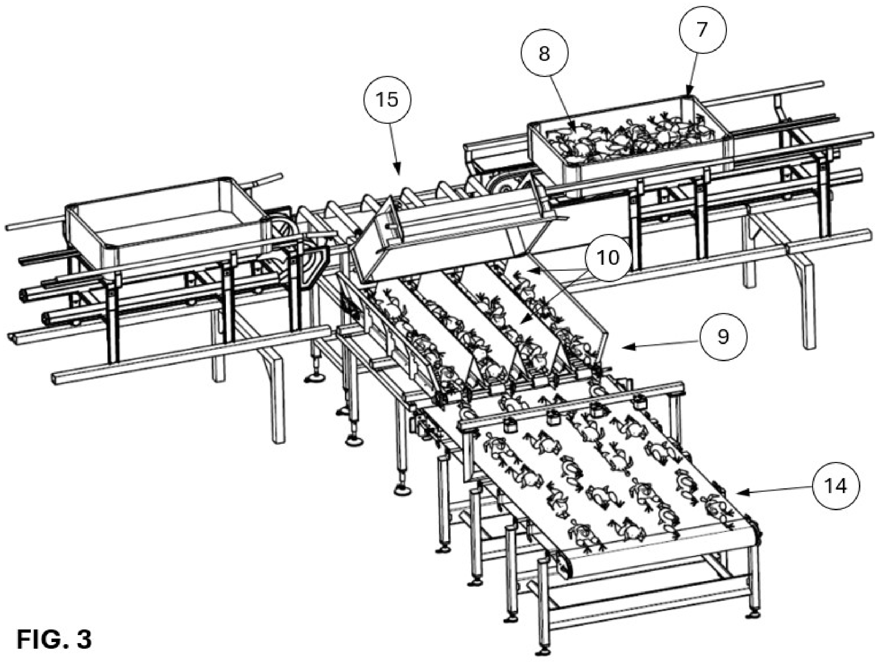

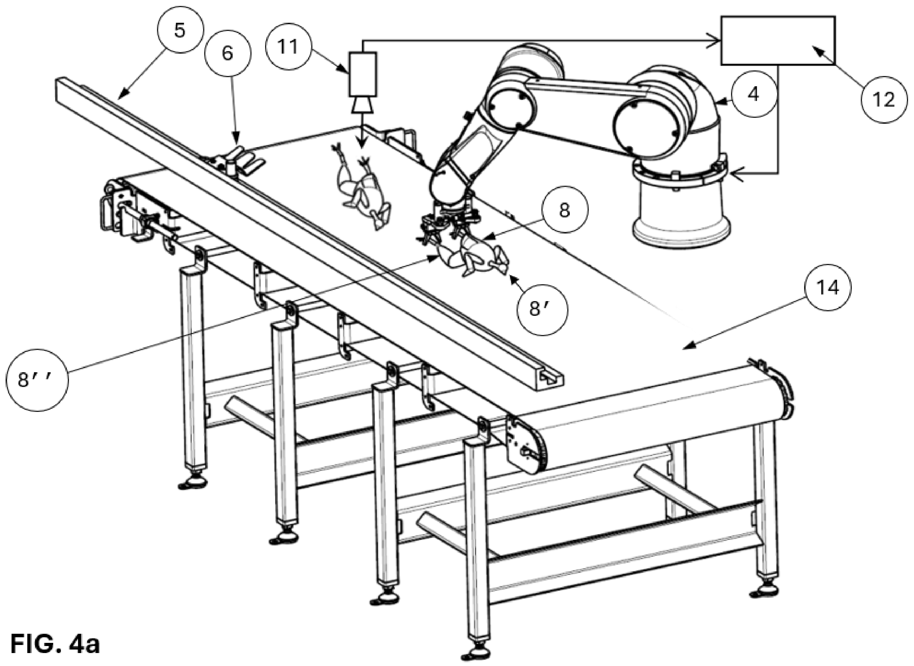

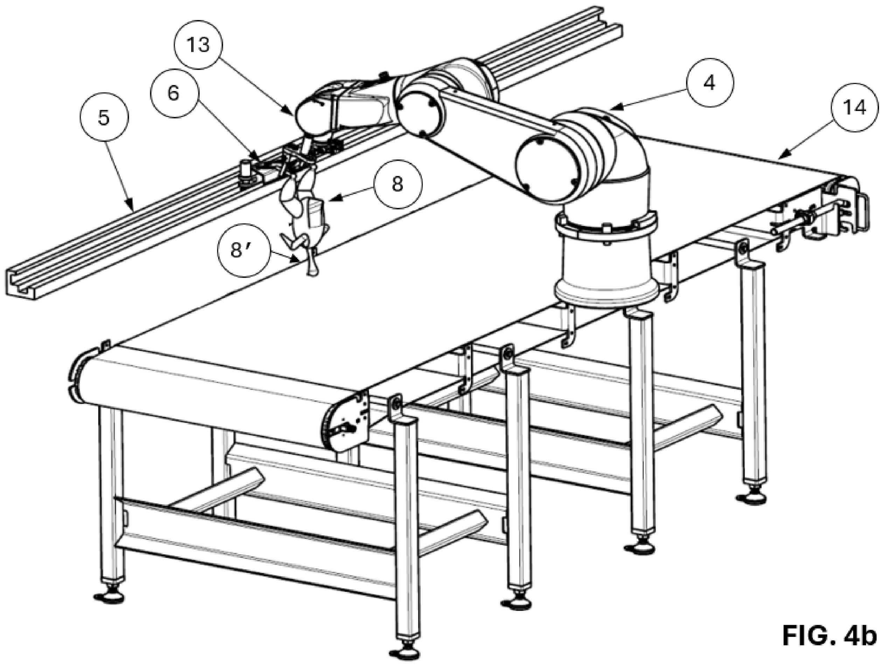

Figure 3 and figure 4a/4b depict a processing system for use in combination with features of the invention, said processing system comprising several parts, to note a feedline 14 for the poultry 8, together with a supply station 15 for the poultry. Further the processing system comprises the vision guided robot 4 and a carrier conveyor 5 for the poultry to be suspended (see figures 4a, 4b). The carrier conveyor 5 comprises a series of carriers 6, only one of which is shown in figures 4a, 4b. The carriers 6 are movable in the conveying direction of the carrier conveyor 5 in a manner that is entirely known to the skilled person and therefore requires no further elucidation.

With reference to figure 3 it shows that the feedline 14 receives the poultry 8 from a supply station 15, which receives the poultry 8 for instance in containers 7 and releases the poultry 8 from the containers 7 to the feedline 14. Accordingly the feedline 14 can receive a plurality of poultry 8 in a nonorganized order.

The supply station 15 is equipped with a transfer portion 9 to supply the poultry 8 that is released from the containers 7 towards the feedline 14. The transfer portion 9 can be equipped with guiding channels 10 to provide the poultry 8 to the feedline 14 in separate lines or moving queues of poultry 8.

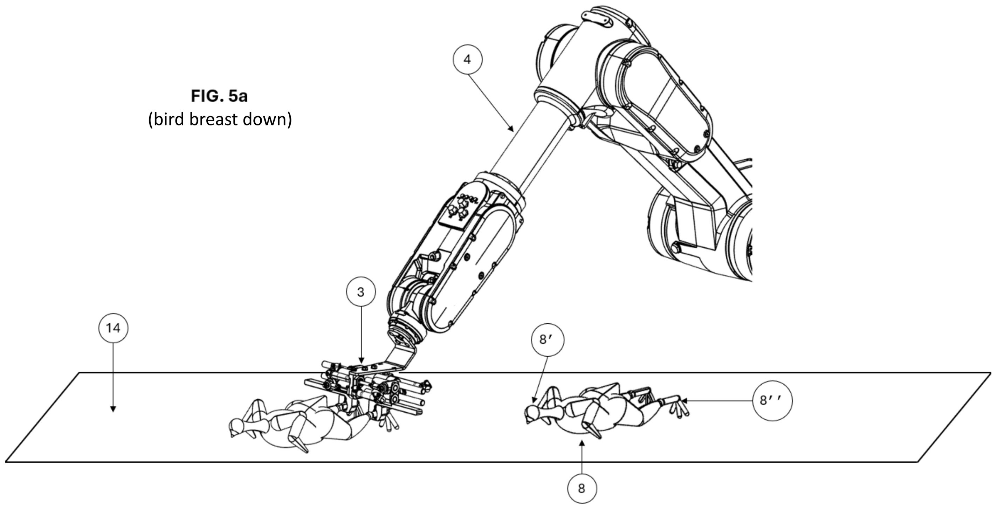

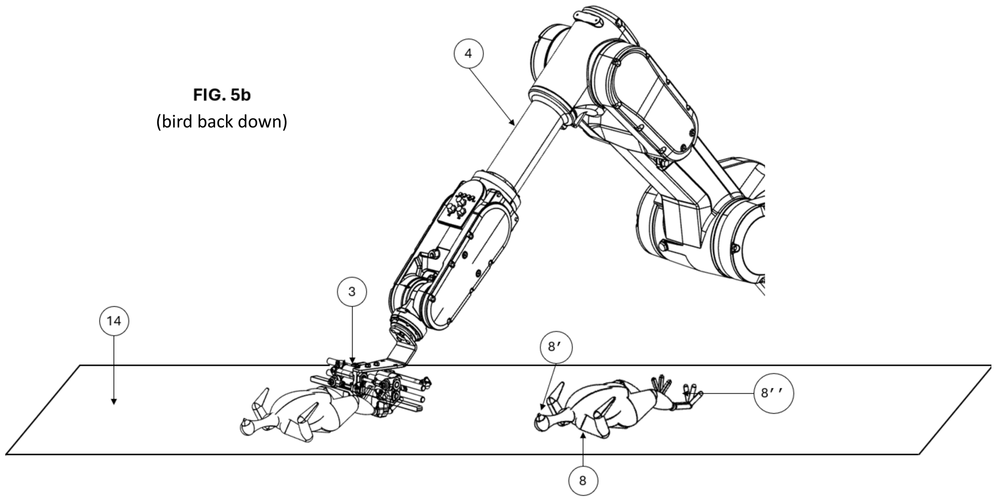

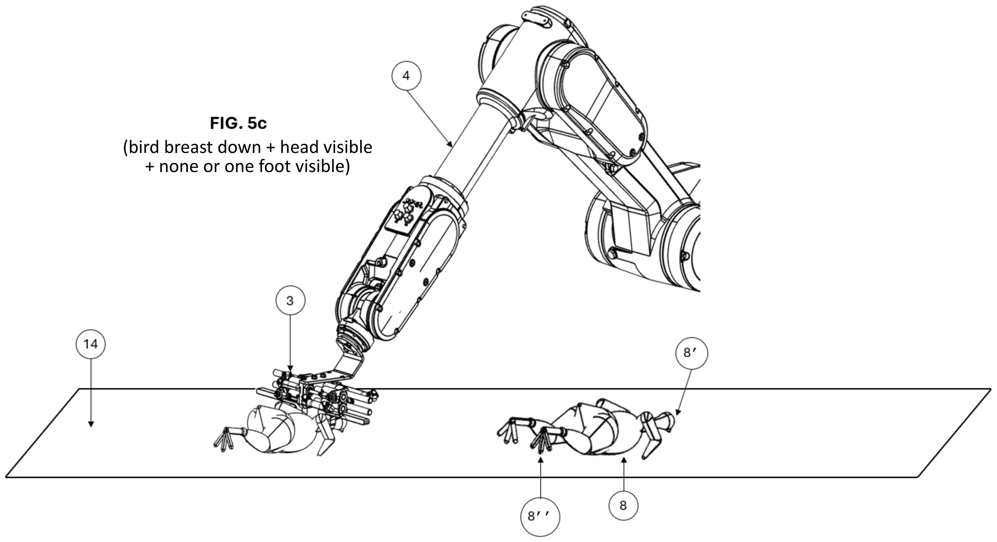

For clarity reasons, as an example figures 5a, 5b and 5c depict three orientations in which the poultry 8 can engage the feedline 14, wherein figure 5a depicts a situation wherein the poultry engages the feedline with its breast down, figure 5b depicts a situation where the poultry engages the feedline with its back down, and figure 5c depicts a situation where the poultry engages the feedline with its breast down, its head visible and none or only one foot visible.

The decision-making tool 12 depicted in figure 4a is arranged to control the vision guided robot 4 to carry out the following processing steps based on images received from the imaging device 11. It is also possible to mount the imaging device on the vision guided robot 4 as shown in figure 4b, where the camera is referred to by numeral 13.

The processing steps are illustrated with reference to figures 5a-5c. In figure 5a and figure 5b the situation is depicted that the poultry legs are visible irrespective of whether the poultry is lying on the breast (figure 5a) or is lying on the back (figure 5b). In that case the decision-making tool 12 is able to identify the legs 8'' of the poultry 8 in the images received from the imaging device 11, 13, and the decision-making tool 12 is arranged to have the vision guided robot 4 engage the legs 8" at the shanks, and to pick up the poultry 8 by the legs 8". Thereafter the vision guided robot 4 can suspend the poultry 8 by the hocks of the legs 8'' from the carrier 6 of the carrier conveyor 5.

Figure 5c on the other hand depicts the situation that merely one leg of the poultry is visible, or that none of the legs of the poultry is visible-see the left-hand part of the figure. In that case the decision-making tool 12 cannot identify the legs 8'' of the poultry 8 in the images received from the imaging device 11, 13, and for that situation the decision-making tool 12 is arranged to search and identify in the images from the imaging device 11, 13 the head 8' of the poultry 8. After the head 8' of the poultry 8 is identified the decision-making tool 12 is arranged to have the vision guided robot 4 engage the head 8' of the poultry 8 by means of at least one set 1, 2 of jaw arms and drag the poultry 8 by the head over a predefined length along the feedline 14 so as to expose both legs of the poultry as shown in the right-hand part of figure 5c. The operation can then be continued by a repetition of the above-mentioned step a to identify the legs 8'' of the poultry 8 in the images received from the camera 11, 13 and to pick up the poultry 8 by engaging the legs 8'' of the poultry 8 and suspend the poultry 8 by the legs 8'' from the carrier 6 of the carrier conveyor 5.

In this latter operation of identifying the legs 8'' of the poultry 8 in the images received from the camera 11, 13, the accuracy of the operation of picking up the poultry by the legs 8'' is improved by using the images from the poultry 8 as derived by imaging of the poultry in order to locate the first leg and the second leg of the poultry, wherein based on the location of the first leg and the second leg of the poultry 8 and prior to clamping the legs 8'' of the poultry, a distance between the primary jaw arms and the secondary jaw arms of the gripper is adjusted to correspond to the distance between the legs 8'' of the poultry.

Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claim to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

## Claims

1. A gripper (3) arranged to engage poultry legs, said gripper comprising a first set (1) of two primary jaw arms (1.1, 1.2) being arranged to clamp a first leg (8'') of a poultry carcass (8), and a second set (2) of two secondary jaw (2.1, 2.2) arms being arranged to clamp a second leg (8") of the poultry carcass (8), wherein at least one of the two primary jaw arms (1.1) is mounted to be movable to and from the other primary jaw arm (1.2) to clamp the first poultry leg (8'') and/or at least one of the two secondary jaw arms (2.1) is mounted to be movable to and from the other secondary jaw arm (2.2) to clamp the second leg (8") **characterized in that** both primary jaw arms (1.1, 1.2) are slidable to and from each other and both secondary jaw arms (2.1, 2.2) are slidable to and fro each other.

2. The gripper according to claim 1, **characterized in that** the gripper is arranged to operate between an open position wherein the primary jaw arms (1.1, 1.2) are distant from each other and the secondary jaw arms (2.1, 2.2) are distant from each other, and a closed position wherein both the primary jaw arms (1.1, 1.2) have moved towards each other and both the secondary jaw arms (2.1, 2.2) have moved towards each other to clamp the legs.

3. The gripper (3) according to claim 1 or 2, **characterized in that** at least one of the first set (1) of two primary jaw arms (1.1, 1.2) and the second set (2) of two secondary jaw arms (2.1, 2.2) comprises a portion (1.3, 2.3) along which at least one of the jaw arms of the concerning set (1, 2) of jaw arms is slidable to and fro the other jaw arm of the concerning set (1,
2) of jaw arms.

4. The gripper (3) according to any one of claims 1-3, **characterized in that** the first set (1) of two primary jaw arms (1.1, 1.2) comprises a first straight portion (1.3) along which one jaw arm (1.1) of the primary jaw arms is slidable to and fro the other primary jaw arm (1.2).

5. The gripper (3) according to any one of claims 1-4, **characterized in that** the second set (2) of two secondary jaw arms (2.1, 2.2) comprises a second straight portion (2.3) along which one jaw arm (2.2) of the secondary jaw arms is slidable to and fro the other secondary jaw arm (2.1).

6. The gripper (3) according to claim 3, 4 or 5, **characterized in that** the straight portion (1.3, 2.3) of the concerning set (1, 2) of jaw arms is integral with one of the primary jaw arms (1.1, 1.2) and/or with one of the secondary jaw arms (2.1, 2.2) of the concerning set (1, 2) of jaw arms, respectively.

7. The gripper (3) according to any one of the previous claims, **characterized in that** a distance between the first set (1) of jaw arms and the second set (2) of jaw arms is adjustable.

8. The gripper (3) according to claim 7, **characterized in that** the gripper is arranged to set the distance between the first set (1) and the second set (2) of jaw arms after the poultry legs are clamped by the jaw arms.

9. A vision guided robot (4) for picking poultry (8) from a feedline (14) and placing the poultry (8) in a poultry carrier (6) of a carrier conveyor (5), **characterized in that** the vision guided robot (4) is provided with at least one gripper (3) according to any one of claims 1-8.

10. A system for automatically suspending poultry (8) by the legs (8") from a carrier (6) of a carrier conveyor (5), comprising a feedline (14) for the poultry (8) to be suspended, wherein the system comprises an imaging device (11, 13) connected to a decision-making tool (12) to process images from the poultry (8) on the feedline (14) received from the imaging device (11, 13), and the decision-making tool (12) is arranged to detect the poultry and to control a vision guided robot (4) to pick up the poultry (8) from the feedline (14) by engaging the poultry (8) at the legs (8"), and subsequently suspend the poultry (8) by the legs (8'') from the carrier (6) of the carrier conveyor (5), **characterized in that** the vision guided robot (4) is provided with at least one gripper according to any one of claims 1-7.

11. The system according to claim 10, **characterized in that** the decision-making tool (12) is arranged to control the vision guided robot (4) to carry out the following processing steps based on images received from the imaging device (11, 13):
a. in case the decision-making tool (12) identifies the legs (8") of the poultry (8) in the images received from the imaging device (11, 13), the decision-making tool (12) is arranged to have the vision guided robot (4) engage the legs (8"), and to pick up the poultry (8) by the legs (8") and suspend the poultry (8) by the legs (8") from the carrier (6) of the carrier conveyor (5); and
b. in case the decision-making tool (12) does not identify the legs (8") of the poultry (8) in the images received from the imaging device (11, 13), the decision-making tool (12) is arranged to search and identify in the images from the imaging device the head (8') of the poultry (8), and after the head (8') of the poultry (8) is identified the decision-making tool (12) is arranged to have the vision guided robot (4) engage the head (8') of the poultry (8) by means of at least the first set (1) of primary jaw arms (1.1, 1.2) and drag the poultry (8) by the head (8') over a predefined length along the feedline (14), followed by a repetition of step a to identify the legs (8'') of the poultry (8) and to pick up the poultry (8) by engaging the legs (8") of the poultry (8) and suspend the poultry (8) by the legs (8'') from the carrier (6) of the carrier conveyor (5).

12. A method for automatically suspending poultry (8) by the legs (8") from a carrier (6) of a carrier conveyor (5), comprising supplying the poultry (8) on a feedline (14), imaging the poultry (8) and processing said images from the poultry (8) on the feedline (14) so as to detect the poultry (8) and to control a vision guided robot (4) comprising a gripper according to any one of claims 1-6, which gripper is used to pick up the poultry (8) from the feedline (14) by engaging the poultry (8) at the legs (8"), and subsequently suspend the poultry (8) by the legs (8") from the carrier (6) of the carrier conveyor (5), **characterized by** engaging the poultry legs by placing the gripper (3) such that a first leg of the poultry is arranged between the primary jaws and a second leg of the poultry is arranged between the secondary jaws of the gripper (3), and thereafter moving at least one of the primary jaws towards the other primary jaw to clamp the first leg and by moving at least one of the secondary jaws towards the other secondary jaw to clamp the second leg.

13. The method according to claim 12, **characterized in that** the first leg is clamped by moving the two primary jaw arms (1.1, 1.2) towards each other and the second leg is clamped by moving the two secondary jaw arms (2.1, 2.2) towards each other, such that a distance between the first set (1) of jaw arms and the second set (2) of jaw arms corresponds to a leg-pitch representing a distance between the legs (8'') of a poultry carcass (8) when hanging from a shackle which is used to suspend and transport the poultry carcass (8).

14. The method according to claim 12 or 13, **characterized in that** the gripper is first placed in a first position to clamp the first leg by the primary jaw arms and is thereafter moved to a second position to clamp the second leg with the secondary jaw arms.

15. The method of any one of claims 12 - 14, **characterized in that** the step of engaging the poultry legs with the gripper (3) is carried out by executing the following sub-steps:
a. in case the images show the legs (8") of the poultry (8) the vision guided robot (4) is arranged to engage the legs (8"), and to pick up the poultry (8) by the legs (8'') and suspend the poultry (8) by the legs (8") from the carrier (6) of the carrier conveyor (5); and
b. in case the images do not show the legs (8'') of the poultry (8), processing the images to search and identify in the images the head (8') of the poultry (8), and arranging that after the head (8') of the poultry (8) is identified the vision guided robot is controlled to grab and drag the poultry (8) by the head (8') over a predefined length along the feedline (14), followed by a repetition of step a to identify the legs (8") in the images of the poultry wherein the vision guided robot subsequently picks up the poultry by the legs (8") and suspends the poultry by the legs (8") from the carrier (6) of the carrier conveyor (5).

16. Computer program loaded on a computer readable medium and executable in a processor with memory embodying the decision-making tool of the system according to claim 9 or 10, which computer program when loaded in said processor and memory causes the system of claim 9 or 10 to execute the operations according to any one of method claims 12-15.
